# EUROPEAN PATENT SPECIFICATION

(11) **EP 3 967 894 B1**
(45) Date of publication and mention of the grant of the patent: **15.11.2023**
(21) Application number: 21194888.0
(22) Date of filing: 03.09.2021
(51) Int. Cl.: F16C 19/54, F16C 25/08, F16C 35/04, F16C 35/077, F16C 35/12, F16C 37/00, B23Q 5/10, B23Q 11/12, F16C 19/16, F16C 19/18

(54) **ELECTROSPINDLE WITH PRELOADED BEARINGS FOR A MACHINE TOOL**
ELEKTROSPINDEL MIT VORGESPANNTEN LAGERN FÜR EINE WERKZEUGMASCHINE
ÉLECTROBROCHE AVEC PALIERS PRÉCHARGÉS POUR UNE MACHINE-OUTIL

(30) Priority: 10.09.2020 IT 202000021433
(43) Date of publication of application: 16.03.2022
(73) Proprietor: Marsetti, Fulvio, 24069 Trescore Balneario (BG) (IT)
(72) Inventor: Marsetti, Fulvio, 24069 Trescore Balneario (BG) (IT)
(74) Representative: Ripamonti, Enrico

(56) References cited:
- EP-A1- 3 112 714
- JP-U- S48 110 551

## Description

The present invention refers to an electrospindle with preloaded bearings for a machine tool.

Electrospindles for machine tools are normally composed of a toolholder spindle and an electric motor aligned and connected with each other so that the electric motor can rotate the toolholder spindle and therefore the tool.

The electrospindle is then structured so that it can be fixed to the carriage of the machine tool.

The electrospindle comprises a central shaft, which is rotated by the motor, and is supported by rear and front bearings.

The bearings are generally preloaded in order to give the system adequate rigidity, by means of preloaded sliding bushes.

Furthermore, high-power electrospindles in particular are provided with cooling systems by means of cooling liquid. EP 3 112 714 A1 discloses an electrospindle according to the preamble of claim 1. JP S48 110551 U also discloses an electrospindle with a cooling system.

The object of the present invention is to provide an electrospindle with preloaded bearings for a machine tool that has a simple preload system of the bearings.

A further object is to provide an electrospindle with which the preload of the bearings can be varied in a variable manner.

In accordance with the present invention, said objects and others still are achieved by an electrospindle with preloaded bearings for a machine tool according to claim 1.

Further characteristics of the invention are described in the dependent claims.

This solution has various advantages with respect to the solutions of the known art.

Thanks to the present invention it is possible to radially preload the bearings, using the cooling liquid of the motor and/or of the bearings.

In this way the existing cooling system is used and no other mechanical means or other hydraulic systems have to be added.

The preload can be varied as required, by simply varying the pressure of the cooling liquid.

The preload is obtained by means of an elastic element, preferably made of selflubricating material, which considerably reduces wear of the mechanical components in contact, contrary to the traditional systems with preloaded sliding bushes.

The characteristics and advantages of the present invention will become evident from the following detailed description of a practical embodiment thereof, illustrated by way of non-limiting example in the attached drawings, in which:

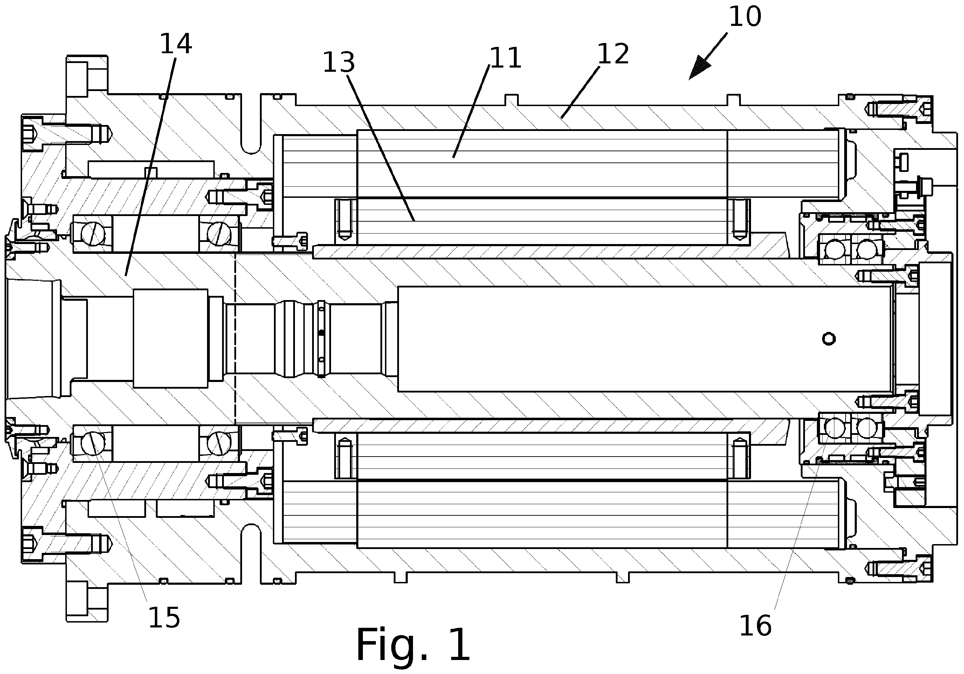

figure 1 shows schematically an electrospindle with preloaded bearings for a machine tool, seen in section, in accordance with the present invention;

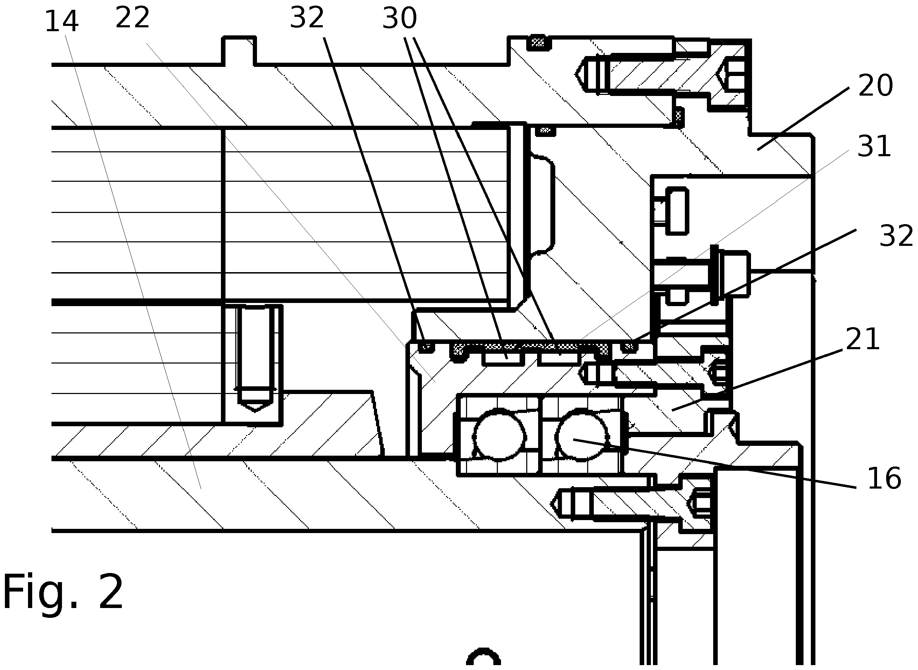

figure 2 shows schematically a portion of an electrospindle with preloaded bearings for a machine tool, seen in section, in accordance with the present invention.

Referring to the attached figures, an electrospindle 10 with preloaded bearings for a machine tool, in accordance with the present invention, comprises an electric motor composed of a stator 11, having tubular cylindrical shape, rigidly fixed to an external container 12; a rotor 13, also having tubular cylindrical shape, coaxial with the stator 11 and which can rotate inside the stator 11. A drive shaft 14, which rotates in combination with the rotor 13, is internally fixed to the rotor 13.

The drive shaft 14 is supported in a rotatable manner by the external container 12 by means of front bearings 15 and rear bearings 16 located at the two ends of the drive shaft 14.

The electrospindle 10 has a circular external flange 20 at the rear which is fixed to the external container 12.

The external flange 20 protrudes inwardly to form a surface that delimits a central through hole.

The external flange 20 is connected to an internal flange 21, which also protrudes inwards, to which a circular housing ring 22 housing the rear bearings 16 is screw-connected.

Therefore, the rear bearings 16 operate between the ring 22 and the drive shaft 14.

The electrospindle 10 further comprises a cooling system (shown only partly) operating by means of cooling liquids, provided, inside elements forming the electrospindle, by means of a series of channels, with an inlet and an outlet for the cooling liquid positioned preferably on the external container 12.

In accordance with the present invention, one or more cooling channels 30 are provided, obtained inside the ring 22 housing the rear bearings 16, near the inner part of the flange 20.

The channels 30, of which only one section can be seen, are positioned circularly around the ring 22, which in turn surrounds the bearings 16.

The channels 30 are obtained inside the ring 22 and are open on the surface towards the flange 20.

A flat and circular gasket 31 is positioned between the cooling channels 30 and the inside of the ring 22, closing said channels 30. Two O-rings 32 are positioned on both sides of the gasket 31 and spaced from it.

The cooling liquid of the electrospindle 10 circulates in the channels 30, and if necessary, in other channels not shown; said electrospindle can have a variable pressure which can be controlled from the outside by supplying the cooling liquid of the electrospindle 10 at the desired pressure.

The pressure applied to the cooling liquid, which on the side of the flange 20 circulates in contact with the gasket 31, presses the gasket 31 against the flange 20 and therefore applies a reaction force on the circular ring 22 which preloads the axle radially composed of shaft, rotor and bearing supports.

The two gaskets 32 have been preferably inserted so that when the pressure of the cooling liquid is low there is no seepage of the cooling liquid outside the designated channels, although the gasket 31 has a thickening at its lateral ends for the same purpose.

Therefore, in accordance with the present invention, it is possible to radially preload the bearings by using the cooling liquid of the motor and/or of the bearings.

## Claims

1. An electrospindle (10) with preloaded bearings for a machine tool comprising:
an external container (12); a drive shaft (14) rotatable with respect to said external container (12), by means of front bearings (15) and rear bearings (16), located at the two ends of said drive shaft (14); a series of channels positioned inside said electrospindle (10) to cause a cooling liquid of said electrospindle (10) to flow; **characterized in that** at least one cooling channel (30) of said electrospindle (10) is provided positioned circularly external to said rear bearings (16) designed to provide a radial force to said rear bearings (16) equal to the pressure of said cooling liquid; said at least one cooling channel (30) is positioned between a circular housing ring (22) housing the rear bearings (16) and a circular external flange (20) which is fixed to the external container (12); two O-ring type gaskets (32),
**characterized in that** the electrospindle further comprises an elastic, flat and circular gasket (31) is positioned between said at least one cooling channel (30) and said external flange (20); wherein the two O-ring type gaskets (32) are positioned laterally to said elastic, flat and circular gasket (31); and
wherein the cooling liquid, which on the side of the flange (20) circulates in contact with the gasket (31), presses said flat and circular gasket (31) against said circular external flange (20) and therefore applies a reaction force on the circular housing ring (22) that preloads radially said rear bearings (16).

2. The electrospindle according to claim 1 **characterized in that** said at least one cooling channel (30) is obtained inside said circular ring (22) and is open on the surface towards said flange (20).

3. The electrospindle according to claim 1 **characterized in that** said electrospindle (10) has at the rear a circular external flange (20) which is fixed to the external container (12).

4. The electrospindle according to claim 3 **characterized in that** said external flange (20) protrudes inwards to form a surface that delimits a central through hole; an internal flange (21) is connected to said external flange (20), said internal flange also protruding inwards, to which a circular ring (22) housing said rear bearings (16) is screw-connected.

5. The electrospindle according to claim 1 **characterized in that** said rear bearings (16) operate between said ring (22) and said drive shaft (14).

## Patentansprüche

1. Elektrospindel (10) mit vorgespannten Lagern für eine Werkzeugmaschine, umfassend: ein äußeres Gehäuse (12); eine Antriebswelle (14), die mittels vorderer Lager (15) und hinterer Lager (16), die an den beiden Enden der besagten Antriebswelle (14) angeordnet sind, in Bezug auf das besagte äußere Gehäuse (12) drehbar ist; eine Vielzahl von Kanälen, die im Inneren der besagten Elektrospindel (10) angeordnet sind, um eine Kühlflüssigkeit der besagten Elektrospindel (10) zum Fließen zu bringen; **dadurch gekennzeichnet, dass** mindestens ein Kühlkanal (30) der besagten Elektrospindel (10) vorgesehen ist, der kreisförmig außerhalb der besagten hinteren Lager (16) angeordnet ist und dazu dient, eine Radialkraft auf die besagten hinteren Lager (16) auszuüben, die gleich dem Druck der besagten Kühlflüssigkeit ist; wobei der besagte mindestens eine Kühlkanal (30) zwischen einem kreisförmigen Aufnahmering (22), der die hinteren Lager (16) aufnimmt, und einem kreisförmigen äußeren Flansch (20) angeordnet ist, der an dem äußeren Gehäuse (12) befestigt ist; zwei O-Ring-Dichtungen (32),
**dadurch gekennzeichnet, dass** die Elektrospindel ferner eine elastische, flache und kreisförmige Dichtung (31) umfasst, die zwischen dem besagten mindestens einen Kühlkanal (30) und dem besagten äußeren Flansch (20) angeordnet ist; wobei die beiden O-Ring-Dichtungen (32) seitlich zu der besagten elastischen, flachen und kreisförmigen Dichtung (31) angeordnet sind; und
wobei die Kühlflüssigkeit, die auf der Seite des Flansches (20) in Kontakt mit der Dichtung (31) zirkuliert, die besagte flache und kreisförmige Dichtung (31) gegen den besagten kreisförmigen äußeren Flansch (20) drückt und somit eine Reaktionskraft auf den kreisförmigen Aufnahmering (22) ausübt, die die besagten hinteren Lager (16) radial vorspannt.

2. Elektrospindel nach Anspruch 1, **dadurch gekennzeichnet, dass** der besagte mindestens eine Kühlkanal (30) im Inneren des besagten kreisförmigen Rings (22) ausgebildet ist und an der Oberfläche in Richtung des besagten Flansches (20) offen ist.

3. Elektrospindel nach Anspruch 1, **dadurch gekennzeichnet, dass** die besagte Elektrospindel (10) an der Rückseite einen kreisförmigen äußere Flansch (20) aufweist, der am Außengehäuse (12) befestigt ist.

4. Elektrospindel nach Anspruch 3, **dadurch gekennzeichnet, dass** der besagte äußere Flansch (20) nach innen ragt, um eine Fläche zu bilden, die eine zentrale Durchgangsöffnung begrenzt; ein innerer Flansch (21) ist mit dem besagten äußeren Flansch (20) verbunden, wobei der besagte innere Flansch ebenfalls nach innen ragt, und mit dem ein kreisförmiger Ring (22) verschraubt ist, der die besagten hinteren Lager (16) aufnimmt.

5. Elektrospindel nach Anspruch 1, **dadurch gekennzeichnet, dass** die besagten hinteren Lager (16) zwischen dem besagten Ring (22) und der besagten Antriebswelle (14) wirken.

## Revendications

1. Électrobroche (10) avec paliers préchargés pour une machine-outil comprenant: un réservoir externe (12); un arbre d'entraînement (14) rotatif par rapport audit réservoir externe (12), au moyen de paliers avant (15) et arrière (16), situés aux deux extrémités dudit arbre d'entraînement (14); une série de canaux positionnés à l'intérieur de ladite électrobroche (10) pour faire circuler un liquide de refroidissement de ladite électrobroche (10); **caractérisée en ce qu'**au moins un canal de refroidissement (30) de ladite électrobroche (10) est prévu, positionné circulairement à l'extérieur desdits paliers arrière (16) conçus pour fournir une force radiale auxdits paliers arrière (16) égale à la pression dudit liquide de refroidissement; ledit au moins un canal de refroidissement (30) est positionné entre une bague de logement circulaire (22) logeant les paliers arrière (16) et une bride externe circulaire (20) qui est fixée au récipient externe (12); deux joints toriques (32),
**caractérisée en ce que** ladite électrobroche comprend en outre un joint élastique, plat et circulaire (31) positionné entre ledit au moins un canal de refroidissement (30) et ladite bride externe (20); où les deux joints toriques (32) sont positionnés latéralement audit joint élastique, plat et circulaire (31); et où le liquide de refroidissement, sur le côté de la bride (20) circule en contact avec le joint (31), pousse ledit joint plat et circulaire (31) contre ladite bride externe circulaire (20) et applique ainsi une force de réaction sur la bague de logement circulaire (22) qui précharge radialement lesdits paliers arrière (16).

2. Électrobroche selon la revendication 1 **caractérisée en ce que** ledit au moins un canal de refroidissement (30) est obtenu à l'intérieur de ladite bague circulaire (22) et est ouvert en surface vers ladite bride (20).

3. Électrobroche selon la revendication 1 **caractérisée en ce que** ladite électrobroche (10) a à l'arrière une bride externe circulaire (20) qui est fixée au récipient externe (12).

4. Électrobroche selon la revendication 3 **caractérisée en ce que** ladite bride externe (20) fait saillie vers l'intérieur pour former une surface qui délimite un trou central traversant; une bride interne (21) est reliée à ladite bride externe (20), ladite bride interne faisant également saillie vers l'intérieur, à laquelle est vissée une bague circulaire (22) logeant lesdits paliers arrière (16).

5. Électrobroche selon la revendication 1 **caractérisée en ce que** lesdits paliers arrière (16) fonctionnent entre ladite bague (22) et ledit arbre d'entraînement (14).
